# DEMANDE DE BREVET EUROPEEN

(11) **EP 0 576 307 A1**
(43) Date de publication de la demande: **29.12.1993**
(21) Numéro de dépôt: 93401001.8
(22) Date de dépôt: 16.04.1993
(51) Int. Cl.: H02K 25/00, B60L 11/18

(54) **Moteur auto-synchrone et chaîne de traction électrique utilisant un moteur auto-synchrone**

(30) Priorité: 23.06.1992 FR 9207625
(71) Demandeur: AUXILEC, F-78400 Chatou (FR)
(72) Inventeur: Arnaud, Georges, F-92402 Courbevoie Cedex (FR); Soroka, Jean-Claude, F-92402 Courbevoie Cedex (FR); Besnier, Pascal, F-92402 Courbevoie Cedex (FR)
(74) Mandataire: Guérin, Michel

(57) **Abrégé**

L'invention concerne un moteur électrique auto-synchrone comportant un rotor (ES), un stator formé d'enroulements statoriques (E1, E2, E3, E4), au moins un interrupteur électronique (K) relié à un enroulement statorique pour contrôler le courant dans l'enroulement statorique, un capteur de la position angulaire du rotor pour contrôler le fonctionnement de l'interrupteur.

Il comporte aussi un dispositif de commutation (a, b, c, d) tournant entrainé par le rotor pour aiguiller un courant provenant d'une source d'alimentation dans des enroulemnts sélectionnées en fonction de la position du rotor. Le dispositif de commutation est interposé dans un circuit comportant la source d'alimentation, les enroulements statoriques et l'interrupteur électronique.

Application notamment aux chaines de traction pour véhicule électrique.

## Description

La présente invention est relative à des chaînes de traction électriques notamment pour véhicules automobiles et plus généralement à des moteurs électriques auto-synchrones qui peuvent être utilisés notamment dans les chaînes de traction électriques pour véhicules automobiles.

On rappelle qu'un moteur autosynchrone est un moteur dans lequel on produit au stator un champ magnétique tournant exactement à la même vitesse que le rotor, quelle que soit cette vitesse, c'est-à-dire en particulier au démarrage. Un capteur de la position du rotor sert à synchroniser le champ magnétique tournant qu'on crée au stator.

Dans le domaine de la technique de traction électrique de véhicules automobiles existe le problème majeur de réduire la quantité et le prix de revient de matière première mise en oeuvre ainsi que le nombre de composants électroniques utilisés pour le contrôle.

La présente invention s'est donnée pour but de pourvoir à une chaîne de traction électrique pour véhicules automobiles qui répond mieux que les chaînes de tractions antérieurement connues à cette nécessité, notamment en ce qu'elle est :
- moins lourde,
- moins chère,
- plus efficace,
- plus fiable,

tout en répondant aux normes de réglementation, et en particulier aux normes de sécurité. L'invention a aussi pour but plus généralement d'améliorer les moteurs électriques en réduisant leur coût.

Les moteurs auto-synchrones connus comportent des enroulements statoriques, généralement montés en étoile, reliés en série avec des interrupteurs électroniques. Ces interrupteurs sont actionnés à une fréquence (qu'on peut appeler haute fréquence) très supérieure à la fréquence électrique des champs magnétiques tournants engendrés au stator; la fréquence (basse) des champs magnétiques tournants correspond à la vitesse de rotation du moteur. Les interrupteurs servent à hacher le courant à haute fréquence avec un rapport cyclique variable de sorte qu'on peut d'une part contrôler la valeur du courant moyen dans les enroulements statoriques pendant des intervalles de temps périodiques (basse fréquence) où un courant circule effectivement dans ces enroulements, et d'autre part interrompre totalement ce courant pendant d'autres intervalles de temps périodiques (basse fréquence). Avec plusieurs enroulements statoriques et donc plusieurs interrupteurs, on peut aiguiller le courant successivement (à basse fréquence) dans les enroulements de manière à créer un champ magnétique statorique tournant. L'enveloppe de variation du courant moyen dans un enroulement est définie par la variation du rapport cyclique du courant haché, qu'on peut régler à volonté en fonction de la forme d'onde souhaitée pour le courant moyen. Ces moteurs auto-synchrones utilisent au moins autant d'interrupteurs électroniques que d'enroulements et ces interrupteurs électroniques sont chers surtout s'ils sont traversés par des courants importants ce qui est le cas dans les véhicules automobiles.

La présente invention a pour but de diminuer le coût du moteur sans diminuer ses performances.

La présente invention propose un moteur électrique auto-synchrone comportant un rotor, un stator avec des enroulements statoriques, au moins un interrupteur électronique relié en série avec un enroulement statorique et commandé par un circuit hacheur à haute fréquence pour contrôler un courant moyen dans l'enroulement, un capteur de position angulaire du rotor pour commander le circuit hacheur. Il comporte aussi un dispositif de commutation mécanique tournant entraîne par le rotor pour aiguiller le courant fourni par une source d'alimentation dans des enroulements sélectionnés en fonction de la position du rotor. Le dispositif de commutation tournant est interposé dans le circuit série formé par la source d'alimentation, les enroulements statoriques et l'interrupteur électronique.

Cette disposition permet de limiter le nombre d'interrupteurs électroniques coûteux tout en conservant la possibilité de contrôler à chaque instant l'amplitude du courant moyen dans les différents enroulements (ce qui permet notamment de contrôler la régularité du couple moteur). De plus, contrairement aux moteurs électriques qui fonctionnent exclusivement à base de commutateurs mécaniques, on peut couper le courant par les interrupteurs électroniques pendant les instants de commutation du dispositif de commutation mécanique, évitant ainsi les étincelles dans ce dispositif.

De préférence, le stator comporte au moins un ensemble de quatre enroulements décalés de 90 degrés électriques les uns des autres, le dispositif de commutation étant relié à une première extrémité de chacun des enroulements, la seconde extrémité de deux des enroulements étant reliée à la source d'alimentation, et la seconde extrémité des deux autres enroulements étant reliée à l'interrupteur électronique. Le dispositif de commutation permet alors de faire passer le courant dans des couples successifs de deux enroulements en série pris parmi les quatre (les deux enroulements d'un couple parcouru par le courant à un moment donné étant décalés de 90° électriques).

Le dispositif de commutation est réalisé à partir de bagues et de balais frottant sur les bagues. En principe les bagues sont portées par le rotor et les balais sont fixes. De préférence, chaque balai est relié à une extrémité d'enroulement statorique et la bague comporte au moins une partie conductrice capable de relier des balais entre eux.

Dans une autre configuration du moteur, le stator comporte un ensemble de quatre enroulement décalés de 90° électriques les uns des autres et montés en étoile, le dispositif de commutation étant monté entre la source d'alimentation et l'extrémité libre de deux des enroulements, et un interrupteur électronique respectif étant monté entre l'extrémité libre de chacun des deux autres enroulements et la source d'alimentation.

Pour que le moteur selon l'invention puisse fonctionner en générateur frein, on prévoit de préférence un interrupteur électronique supplémentaire avec un circuit hacheur correspondant, l'interrupteur étant connecté en parallèle sur les enroulements statoriques, avec une diode en série entre l'alimentation et les enroulements statoriques pour empêcher le passage d'un courant de décharge de la source d'alimentation.

L'invention concerne aussi une chaîne de traction électrique, notamment pour véhicule automobile, utilisant un moteur autosynchrone (à dispositif de commutation mécanique ou non) et alimentée par une source d'alimentation en courant rechargeable, avec des moyens pour recharger la source en utilisant directement un ou plusieurs enroulements et un ou plusieurs interrupteurs électroniques du moteur.

Cette chaîne de traction comporte alors une source d'alimentation rechargeable, un moteur auto-synchrone pourvu d'un rotor et d'un stator, avec des enroulements pour faire fonctionner le moteur et au moins un interrupteur électronique pour contrôler le courant de la source dans au moins un des enroulements lorsque le moteur fonctionne. Elle est caratérisée en ce qu'elle comporte aussi des moyens pour recharger la source d'alimentation rechargeable lorsque le moteur est à l'arrêt, ces moyens utilisent l'interrupteur électronique de contrôle, au moins deux enroulements qui forment respectivement le secondaire et le primaire d'un transformateur et une ou plusieurs diodes qui laissent passer un courant dans un sens de recharge de la source. De préférence, le rotor est bobiné et sert de primaire au transformateur, les enroulements statoriques servant de secondaire.

Par conséquent on n'a pas besoin de circuits de recharge de l'alimentation distincts de ceux qui servent à faire fonctionner le moteur. Surtout on peut se servir des interrupteurs électroniques déjà présents dans le moteur et qui sont particulièrement coûteux.

Cette chaîne de traction utilise de préférence un moteur auto-synchrone ayant à la fois un ou des interrupteurs électroniques et un dispositif de commutation mécanique tournant qui assure l'aiguillage du courant dans les enroulements statoriques.

L'invention concerne également une chaîne de traction électrique, notamment pour véhicule automobile, utilisant un moteur autosynchrone, dont le stator possède des enroulements statoriques permettant de faire marcher le moteur, qui est caractérisée en ce que le stator comporte au moins un enroulement supplémentaire couplé électromagnétiquement aux enroulements statoriques et en ce qu'il est prévu un circuit de redressement connecté entre l'enroulement supplémentaire et une batterie de servitude rechargeable pour recharger la batterie pendant la rotation du moteur.

On n'a de ce fait pas besoin de générateur ou alternateur pour recharger une telle batterie de servitude; on n'est pas non plus obligé d'utiliser comme batterie de servitude une partie de la source d'alimentation du moteur, ce qui serait préjudiciable à l'équilibre entre les différentes batteries qui composent généralement la source d'alimentation du moteur.

Enfin l'invention concerne aussi de manière générale l'ensemble d'une chaîne de traction électrique pour véhicule automobile utilisant un moteur auto-synchrone avec un rotor, un stator avec des enroulements statoriques et au moins un interrupteur électronique relié en série avec un interrupteur électronique ; la chaîne comporte un dispositif de commande permettant au moteur de fonctionner en générateur-frein, des moyens permettant de délivrer une tension alimentant une batterie de servitude, des moyens permettant d'inverser le sens de la marche du moteur, des moyens permettant de recharger au moins un accumulateur servant de source d'alimentation générale du moteur, les moyens permettant de délivrer la tension alimentant la batterie de servitude et les moyens permettant de recharger l'accumulateur utilisent au moins l'interrupteur électronique.

Selon un mode de réalisation, une chaîne de traction électrique pour véhicule automobile selon l'invention comprend :
- au moins un générateur électrique constitué par au moins un accumulateur et/ou au moins une pile à combustible et/ou au moins un groupe électrogène ;
- au moins une machine électrique du type auto-synchrone comprenant :
- un stator polyphasé comprenant au moins un ensemble de quatre enroulements statoriques décalés de 90 degrés électriques les uns des autres, au moins un dispositif de commutation séquentielle d'une phase à l'autre, et un dispositif de commande de la machine électrique en fonctionnement moteur et en fonctionnement générateur/frein ;
- un rotor ;
- des moyens permettant de délivrer une tension alimentant une batterie de servitude ;
- des moyens permettant d'inverser le sens de la marche de la machine électrique ;
- des moyens permettant de recharger au moins un accumulateur ;

caractérisée en ce que chaque dispositif de commutation séquentielle d'une phase à l'autre comprend une bague tournante et quatre balais permettant d'établir le contact entre deux enroulements statoriques quelconques pris parmi lesdits quatre enroulements statoriques et décalés entre eux de 90 degrés électriques.

D'autres caractéristiques et avantages de l'invention apparaîtront à la lecture de la description suivante faisant référence aux figures ci-annexées dans lesquelles :
- la figure 1 représente un circuit électrique d'un moteur auto-synchrone selon l'invention;
- les figures 2a et 2b représentent deux modes de réalisation particuliers du circuit décrit en figure 1 ;
- la figure 3 représente le schéma électrique du circuit qui assure les fonctionnements en moteur, en générateur frein, en chargeur et en convertisseur d'une chaîne de traction conforme à l'invention, selon un premier mode de réalisation;
- la figure 4 représente le circuit électrique d'une variante d'un moteur auto-synchrone selon l'invention;
- la figure 5 représente un mode de réalisation préférentiel du circuit décrit en figure 4 ;
- la figure 6 représente le schéma électrique du circuit qui assure le fonctionnement en générateur frein du moteur de la figure 4;
- la figure 7 représente une chaîne de traction conforme à l'invention, cette chaîne de traction ayant une fonction de chargeur;
- la figure 8 représente une chaîne de traction, avec fonction de convertisseur, conforme à l'invention;
- la figure 9 représente le schéma électrique du circuit qui assure les fonctionnements en moteur, en générateur frein, en chargeur et en convertisseur d'une chaîne de traction conforme à l'invention, selon un deuxième mode de réalisation de l'invention ;
- la figure 10 représente le schéma électrique du circuit qui assure les fonctionnements en moteur, en générateur frein, en chargeur et en convertisseur d'une chaîne de traction selon un troisième mode de réalisation de l'invention.

Sur toutes les figures, les mêmes repères désignent les mêmes éléments.

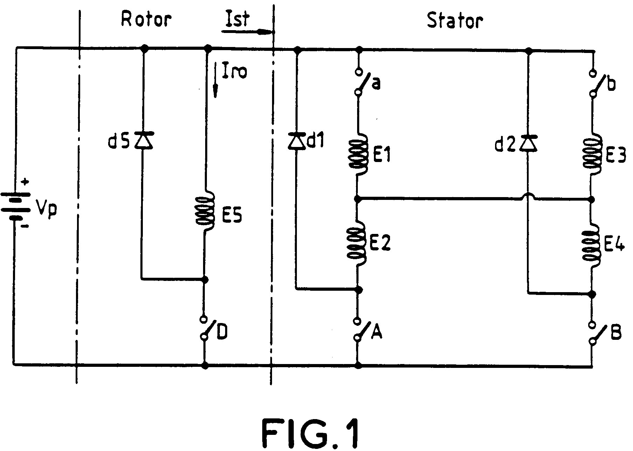

La figure 1 représente un circuit électrique d'un moteur auto-synchrone selon l'invention. Ce circuit comporte un rotor bobiné E5 et un stator à quatre enroulements E1, E2, E3, E4. Le rotor pourrait ne pas être bobiné et être à aimants permanents.

Les quatre enroulements statoriques E1, E2, E3, E4 de la figure 1 sont montés en étoile. E1 et E3, E2 et E4 sont décalés entre eux de 180 degrés électriques, alors que les enroulement E1 et E2 - et donc E3 et E4 - sont décalés entre eux de 90 degrés électriques. Les enroulements E1 et E3 sont reliés à une première borne d'une source d'alimentation VP qui est ici la borne positive d'un accumulateur ou batterie. La source d'alimentation est une source continue ou redressée. Les enroulements E2 et E4 sont reliés à une seconde borne de la source d'alimentation VP. L'enroulement rotorique E5 est monté aux bornes de la source d'alimentation VP. Dans la suite on donne le même nom VP à la source d'alimentation et à la tension à ses bornes.

Un dispositif de commutation a, b et une paire de hacheurs A, B permettent de contrôler et aiguiller les courants dans les enroulements. En aiguillant successivement grâce au dispositif de commutation a, b le courant statorique Ist provenant de la source d'alimentation VP vers les enroulements E1 + E2, E3 + E2, E3 + E4, E1 + E4, on crée un champ tournant statorique. Le dispositif de commutation formé de deux commutateurs a et b est inséré entre la première borne de la source d'alimentation VP et respectivement les enroulements E1 et E3. Les hacheurs A et B sont insérés entre respectivement les enroulements E2 et E4 et la seconde borne de la source d'alimentation VP.

Les hacheurs A et B assurent un contrôle de la valeur dudit courant par une modulation appropriée. La fréquence des hacheurs est beaucoup plus grande que la fréquence de commutation du dispositif de commutation, cette dernière correspondant à la vitesse de rotation du rotor. Le contrôle de la valeur du courant moyen dans les enroulements est essentiellement réalisé par la modulation du rapport cyclique de mise en conduction des hacheurs. Les hacheurs A et B sont des interrupteurs électroniques (transistor bipolaire - MOSFET-IGBT- Thyristor, etc...) commandés par un circuit hacheur non représenté. On sait réaliser des circuits hacheurs permettant d'établir des formes d'onde de courant moyen désirées.

Dans le cas du moteur de la figure 1, les hacheurs A et B établissent ces formes d'onde désirées et assurent par ailleurs une fonction d'aiguillage du courant statorique nécessaire pour la création du champ tournant statorique. Par exemple lorsque le commutateur a est fermé (b ouvert) pour alimenter l'enroulement E1, on va avoir dans une première phase (basse fréquence) un hachage du courant à haute fréquence par l'interrupteur B, l'interrrupteur A étant ouvert; puis, dans une seconde phase basse fréquence on aura un hachage par l'interrupteur A, l'interrupteur B étant ouvert. De même lorsque le commutateur b est fermé (a ouvert).

Les enroulements E1 + E2, E2 + E3, E3 + E4, E4 + E1 sont le siège de forces contre-électromotrices alternatives, dont l'amplitude est, - dans le fonctionnement en moteur objet de la présente description -, inférieure à la tension d'alimentation de la batterie VP.

Le dispositif de commutation a et b est mécanique et réalisé avec un ensemble bague-balai. Il est entraîné par le rotor. Il assure donc un aiguillage des courants statoriques en synchronisme avec la rotation du rotor. Cet aiguillage successif dans les enroulements produit le champ magnétique statorique tournant synchronisé avec la vitesse de rotation du rotor.

Des diodes d1 et d2, dites de "roue libre", assurent la protection des hacheurs A et B en entretenant le passage du courant dans les enroulements statoriques jusqu'à extinction naturelle de ce courant dans ces enroulements. Les diodes d1 et d2 sont montées chacune en parallèle avec respectivement les couples d'enroulements E1, E2, et E3, E4.

Le courant Iro de l'enroulement rotorique E5, contrôlé par un hacheur D et protégé par une diode de "roue libre" d5, assure la création du champ rotorique. Le hacheur D est inséré entre l'enroulement E5 et une borne de la source d'alimentation VP. La diode d5 est en parallèle avec l'enroulement E5.

Le contrôle électronique des hacheurs A et B est synchronisé avec la rotation du rotor. Il est tel que le champ magnétique statorique soit maintenu en quadrature de phase par rapport au champ rotorique pour donner un couple maximum. Ceci est réalisé grâce à des capteurs de la position angulaire du rotor.

Les hacheurs A et B assurent donc le contrôle de la valeur du courant statorique en fonction de la position angulaire du rotor et en fonction du couple souhaité (ce contrôle peut s'effectuer par tous les types de modulation possibles y compris la modulation PWM). De façon plus précise, étant donné que la commande des courants statoriques est fonction de la position angulaire du rotor, on détecte cette position au moyen de capteurs de position angulaire, de manière à permettre, après traitement dans un processeur, la commande des hacheurs en commutation et modulation pour optimiser le fonctionnement et le rendement du moteur.

Le contrôle du courant statorique par les hacheurs A et B est de préférence tel que lors de l'aiguillage du courant d'un enroulement vers un autre par les commutateurs a et b du dispositif de commutation mécanique, le courant soit nul dans les enroulements. Les risques d'étincelles au niveau du dispositif de commutation sont diminués voire supprimés et l'usure des balais du dispositif de commutation est réduite.

Le moteur ainsi décrit peut fonctionner en générateur le sens de passage des courants statoriques est alors inversé.

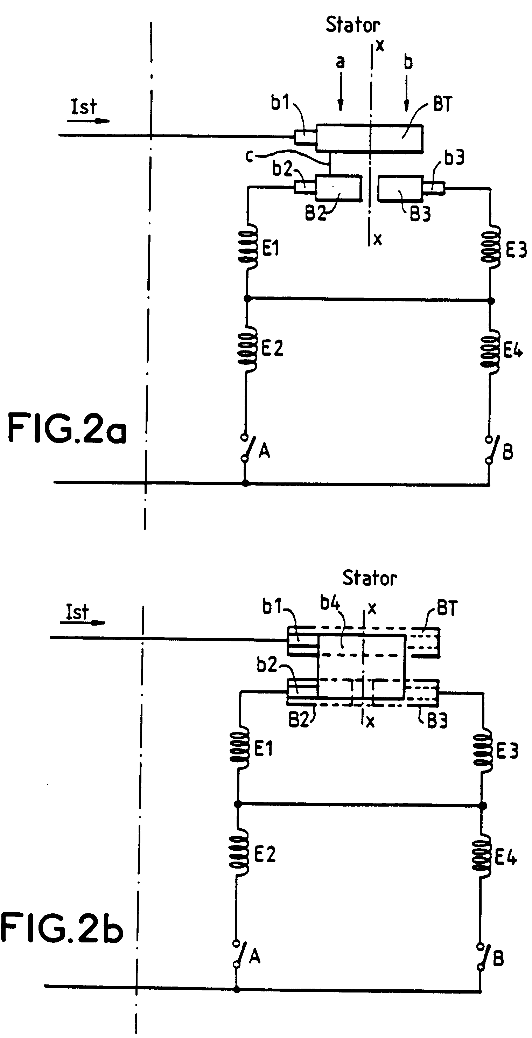

La figure 2a représente un premier mode de réalisation particulier du circuit décrit en figure 1.

Le dispositif de commutation a et b est formé d'une bague tournante BT, laquelle est reliée à la tension d'alimentation VP par un balai b1, et de deux demi-bagues tournantes B2 et B3 électriquement isolées l'une de l'autre. Les bagues tournent grâce à un système d'entraînement lié au rotor.

La demi-bague B2 est reliée, à l'aide de la connexion C, à la bague BT.

Le courant statorique passe dans la bague tournante BT à l'aide du balai b1. Les demi-bagues B2 et B3 sont disposées de façon que le courant statorique alimente soit l'enroulement E1, soit l'enroulement E3. En effet, dans un premier temps, l'enroulement E1 est alimenté par l'intermédiaire d'un balai fixe b2 alors que, dans un deuxième temps - soit après rotation d'un demi-tour de la demi-bague B2 -, l'enroulement E3 est alimenté par l'intermédiaire d'un balai fixe b3. Les balais b2 et b3 frottent alternativement sur les bagues B2 et B3.

La figure 2b représente un deuxième mode de réalisation particulier du circuit décrit en figure 1.

Dans cette variante, la bague BT et les demi-bagues B2 et B3 sont fixes. Un balai double tournant b4 assure, lors de sa rotation, l'alimentation soit de l'enroulement E1, soit de l'enroulement E3. Le balai b4 est entraîné en rotation par le rotor. Dans un premier temps, le balai b4 court-circuite la bague BT et la demi-bague B2, permettant ainsi l'alimentation de l'enroulement E1 et, dans un deuxième temps - soit un demi-tour plus tard -, ce même balai court-circuite la bague BT et la demi-bague B3, permettant ainsi l'alimentation de l'enroulement E3.

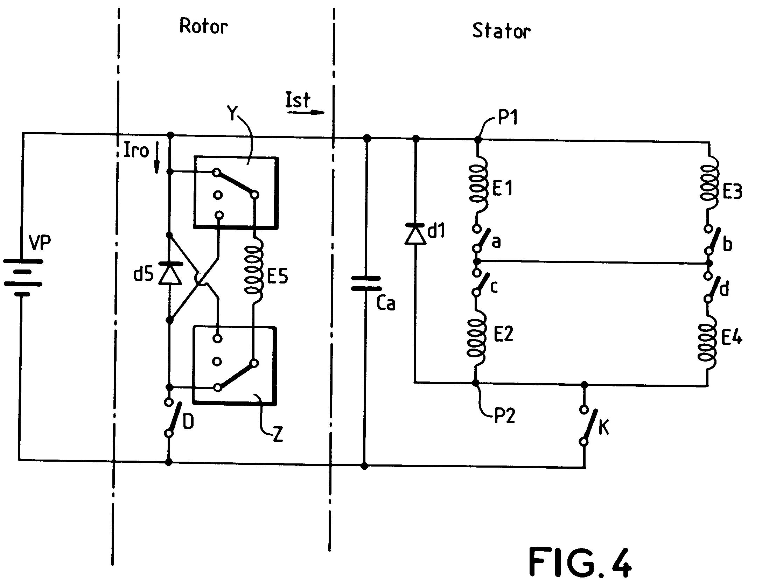

La figure 4 représente un moteur auto-synchrone conforme à l'invention, selon un second mode de réalisation. Le moteur est composé d'un stator bobiné à 2n pôles et à 4 enroulements séparés (E1, E2, E3, E4) décalés entre eux de 90 degrés électriques et d'un rotor bobiné à 2n pôles et à un seul enroulement (E5) alimenté par bagues et balais non représentés sur la figure.

Le dispositif de commutation qui assure l'aiguillage du courant dans les enroulements statoriques comporte ici quatre commutateurs a, b, c, d montés en étoile. Chacun des enroulements E1, E2, E3, E4 est relié à un commutateur respectif : l'enroulement E1 est connecté au commutateur a, l'enroulement E2 au commutateur b, l'enroulement E3 au commutateur c, et l'enroulement E4 au commutateur d. Les extrémités des enroulements non connectées aux commutateurs sont reliées entre elles deux par deux : ainsi, d'une part les enroulements E1 et E3 et d'autre part les enroulements E2 et E4 sont-ils reliés entre eux respectivement aux points P1 et P2. Le point P1 est relié à la tension d'alimentation VP et le point P2 est relié à la première extrémité d'un hacheur K (interrupteur et circuit de hachage non représenté) dont la deuxième extrémité est reliée à l'alimentation VP de façon à refermer le circuit électrique.

Les quatre commutateurs mécaniques a, b, c, d, permettent d'aiguiller le courant statorique Ist successivement dans les enroulements E1 + E2, E3 + E2, E3 + E4 et E1 + E4 de façon à créer un champ tournant. Le hacheur électronique K permet de contrôler l'évolution du courant moyen dans ces enroulements.

Le hacheur K, accompagné de la diode d1, constitue donc un circuit de commande du courant dans les enroulements E1, E2, E3, E4 en contrôlant la valeur dudit courant par une modulation appropriée. Un avantage de ce montage est d'effectuer la commande du courant statorique à l'aide d'un seul hacheur K alors que dans l'exemple de la figure 1 deux hacheurs (A, B) interviennent tour à tour. La diode d1, dite de "roue libre", permet d'absorber les transitoires de courant dus à la présence des enroulements et qui apparaissent lors de l'ouverture et de la fermeture du hacheur K. Une capacité Ca permettant, comme cela est connu de l'homme de l'art, d'injecter du courant dans les enroulements statoriques aux moments opportuns est placé en parallèle de l'alimentation de tension VP.

La loi de contrôle du courant Ist peut permettre de modifier les variations de couple en fonction de l'angle de rotation et/ou d'interrompre le courant au moment de la commutation dans les quatre commutateurs a, b, c, d. Un capteur de position angulaire du rotor permet de le faire, comme expliqué à propos de la figure 1.

Avantageusement, selon le mode de réalisation préférentiel, le dispositif ne comprend qu'un seul interrupteur électronique et, partant, qu'une seule diode de roue libre.

Un autre avantage de ce montage réside en ce que l'ensemble que constituent les quatre commutateurs a, b, c, d n'est pas relié à la tension d'alimentation de la batterie VP, ce qui simplifie le câblage du circuit.

Le contrôle du courant rotorique Iro s'effectue grâce à un hacheur D. Le hacheur D est un interrupteur électronique, par exemple un transistor, qui contrôle le courant d'excitation traversant l'enroulement rotorique E5 par modulation de largeur d'impulsion. Une diode de roue libre d5 est montée en parallèle de l'enroulement rotorique E5. L'inversion du sens de marche de la machine électrique s'effectue par inversion du sens du courant dans l'enroulement E5, par exemple à l'aide de deux commutateurs Y et Z, et de 2 éléments de câblage, comme cela est connu de l'homme de l'art et représenté en figure 4.

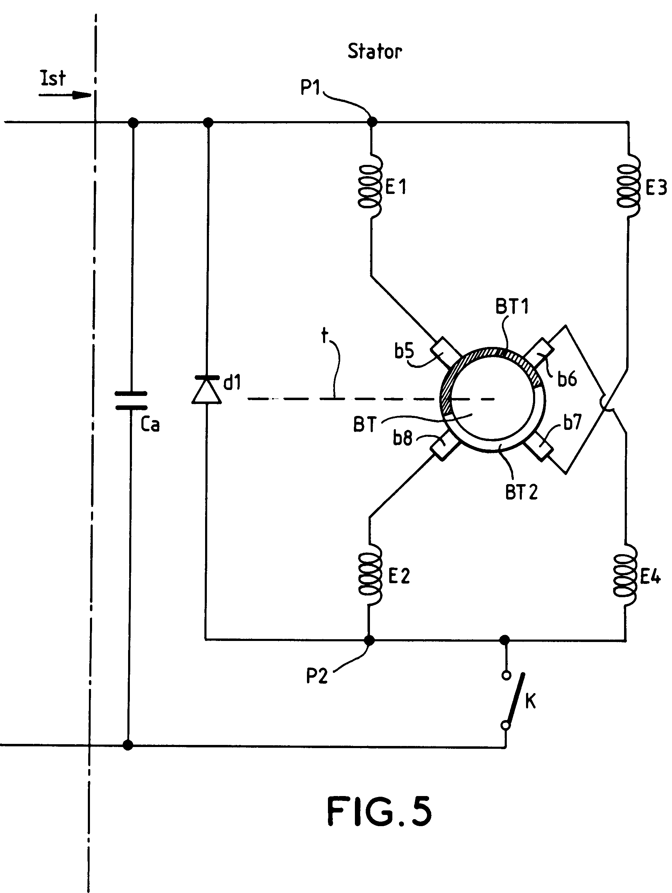

La figure 5 représente le mode de réalisation préférentiel du circuit décrit en figure 4.

Selon ce mode de réalisation, la machine tournante fonctionnant en moteur est une machine à 2 pôles et le dispositif de commutation que constituent les quatre commutateurs a, b, c, d comprend une bague tournante BT et quatre balais b5, b6, b7, b8. La bague tournante BT est, par exemple, constituée sur la première moitié de sa partie supérieure d'une demi-bague conductrice BT1 et sur la deuxième moitié de sa partie supérieure d'une demi-bague isolante BT2. La bague BT tourne grâce à un système d'entraînement mécanique lié au rotor et représenté symboliquement sur la figure par le trait tireté t. En tournant, la demi-bague conductrice BT1 assure successivement les connexions des balais b5 et b8, b8 et b7, b7 et b6, b6 et b5, raccordant ainsi successivement les enroulements E1 et E2, E2 et E3, E3 et E4, E4 et E1.

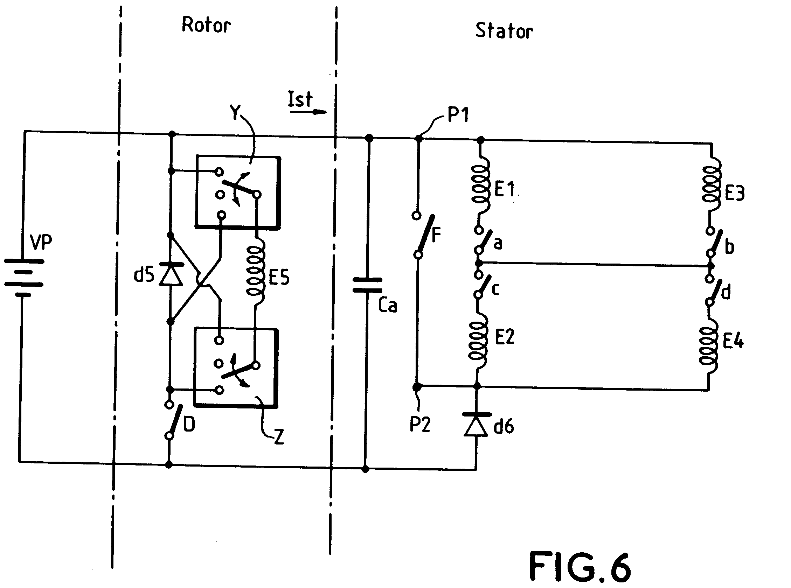

La figure 6 représente le schéma électrique du circuit qui permet le fonctionnement en générateur frein du moteur de la figure 4.

Le passage en générateur frein s'effectue par inversion du courant statorique : on bloque le hacheur K. Un autre hacheur F et une diode de roue libre d6 sont prévus. Le hacheur F est connecté en parallèle sur les enroulements statoriques entre les points précédemment définis P1 et P2 alors que la diode de roue libre d6 est placée entre le point P2 et l'alimentation VP de façon à refermer le circuit électrique en ne laissant passer les courants que dans le sens inverse du sens en fonctionnement moteur. La force contre électromotrice développée dans les enroulements statoriques crée un courant qui passe dans le hacheur F fermé. En ouvrant le hacheur ce courant est forcé de circuler à travers la diode d6 vers la source d'alimentation VP dans un sens qui tend à recharger la source VP. Le contrôle du flux magnétique peut être effectué par le hacheur D qui commande le courant moyen dans l'enroulement rotorique (dans le cas d'un rotor bobiné uniquement). Sur la figure 6 on n'a pas représenté le hacheur K et la diode de roue libre d1 du moteur, puisque ces éléments n'interviennent pas dans le fonctionnement en générateur-frein. Le dispositif de commutation peut être celui de la figure 5.

Le hacheur F contrôle le passage du courant statorique Ist en modulation de largeur en court-circuitant les enroulements qui sont connectés. Il constitue donc, accompagné de la diode d6, un circuit de commande du courant statorique.

On peut aussi faire fonctionner en générateur-frein le moteur représenté à la figure 1, mais l'avantage de la structure de moteur de la figure 4, est qu'il suffit de rajouter un seul interrupteur électronique F et une seule diode d6 pour obtenir le fonctionnement en générateur frein.

Le contrôle du couple de freinage s'effectue par le contrôle qu'effectue le hacheur F sur le courant statorique Ist. Un avantage du circuit de la figure 6 réside en ce que le freinage s'effectue à l'aide des 4 enroulements. Un autre avantage de l'invention réside en ce que le fonctionnement en générateur frein est compatible avec des vitesses très faibles.

Le contrôle du flux est effectué par le même circuit d'excitation que pour le fonctionnement en moteur.

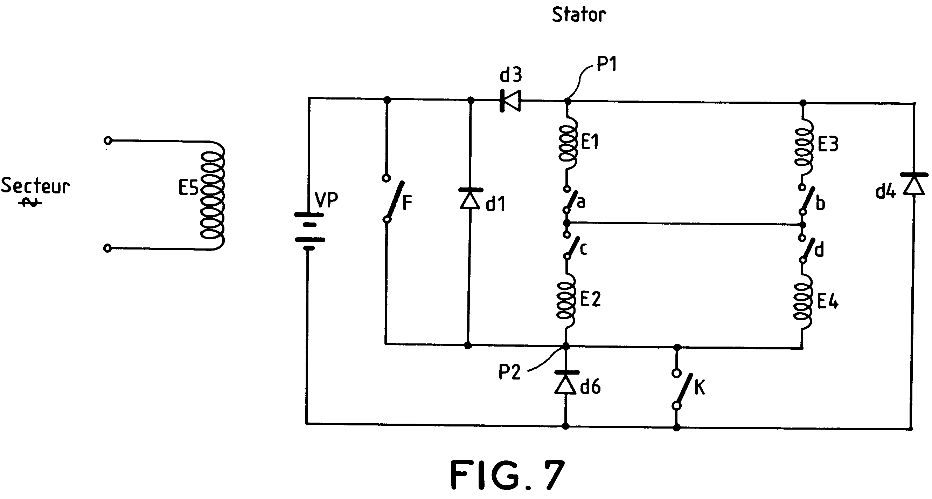

La figure 7 représente le schéma électrique d'une chaîne de traction selon l'invention avec fonction de chargeur. Elle comporte un moteur auto-synchrone qui peut être du type représenté et décrit aux figures 4, 5, 6. Ce moteur comporte donc dans cet exemple quatre commutateurs mécaniques a, b, c, d et au moins un interrupteur électronique K.

L'enroulement rotorique E5 est alors relié au secteur. Il forme le primaire d'un transformateur, les enroulements statoriques formant le secondaire. Le fonctionnement en chargeur s'effectue lorsque le moteur est à l'arrêt.

Le point P1 est relié à la borne positive de l'alimentation VP par l'intermédiaire d'une diode d3 qui laisse passer le courant dans le sens de la charge de la source VP. Le point P2 est relié à la borne négative de l'alimentation VP par l'intermédiaire du hacheur K et de la diode d6 qui est en parallèle dudit hacheur K. La borne positive de l'alimentation VP est reliée, quant à elle, au point P2 par l'intermédiaire du hacheur F et de la diode d1 qui est en parallèle dudit hacheur F.

L'ensemble des quatre diodes d1, d3, d4, d6 constitue un pont de diodes qui permet de faire un redressement double-alternance commandé par les hacheurs F et K.

Lorsque la machine est à l'arrêt, deux enroulements statoriques sont en série. Il s'agit soit de (E1, E2), de (E1, E4), de (E3, E2) ou de (E3, E4) selon la position des commutateurs a, b, c, d. Une force électromotrice sinusoïdale à la fréquence du secteur est présente aux bornes de ces deux enroulements statoriques. Ces deux enroulements forment le secondaire du transformateur.

Le fonctionnement en chargeur s'effectue ici sur les deux alternances de la force électromotrice sinusoïdale. Pour la première alternance, seuls la diode d3, la diode d6 et l'interrupteur F interviennent (l'interrupteur K est maintenu bloqué). Pour la deuxième alternance, seuls la diode d1, la diode d4 et l'interrupteur K interviennent (l'interrupteur F est maintenu bloqué).

Dans la première alternance l'interrupteur F est commuté à haute fréquence (très supérieure à la fréquence du secteur); pendant qu'il est fermé le courant engendré dans les enroulements statoriques se referme à travers la diode d3 (passante) et l'interrupteur F fermé; lorsque l'interrupteur s'ouvre, le courant inductif continue à circuler à travers la diode d3, la source VP et la diode d6, rechargeant ainsi la source VP. Pendant la deuxième alternance le fonctionnement est le même avec les éléments d4, K et d1.

La recharge pourrait aussi s'effectuer uniquement pendant la deuxième alternance, ce qui permet d'éviter d'utiliser un interrupteur électronique F, seule la diode d4 étant à rajouter au schéma du moteur de la figure 4. Cependant, si le moteur est déjà agencé de manière à fonctionner en générateur frein, on dispose d'un interrupteur F et d'une diode d6 en plus de l'interrupteur K (figure 6). Il est alors avantageux de faire un chargeur fonctionnant en double alternance à l'aide des éléments existants auxquels on rajoute seulement la diode d3.

Un avantage du dispositif de contrôle est de pouvoir limiter le taux d'harmoniques prélevées au secteur et de travailler à cos(phi) voisin de 1.

On pourrait aussi envisager d'utiliser dans cette chaîne de traction ayant fonction de chargeur, un moteur auto-synchrone qui n'aurait pas de commutateurs mécaniques mais uniquement des commutateurs électroniques, bien que la solution avec commutateurs mécaniques soit préférable.

On peut imaginer d'autres configurations de circuits de charge de la source VP, utilisant deux enroulements statoriques comme primaire d'un transformateur alimenté par le secteur, et les deux autres enroulements statoriques comme secondaire. On peut alors recharger la source d'alimentation même si le rotor est à aimants permanents. Le moteur est à l'arrêt pendant la charge. Une telle configuration est possible notamment avec le schéma de moteur de la figure 1.

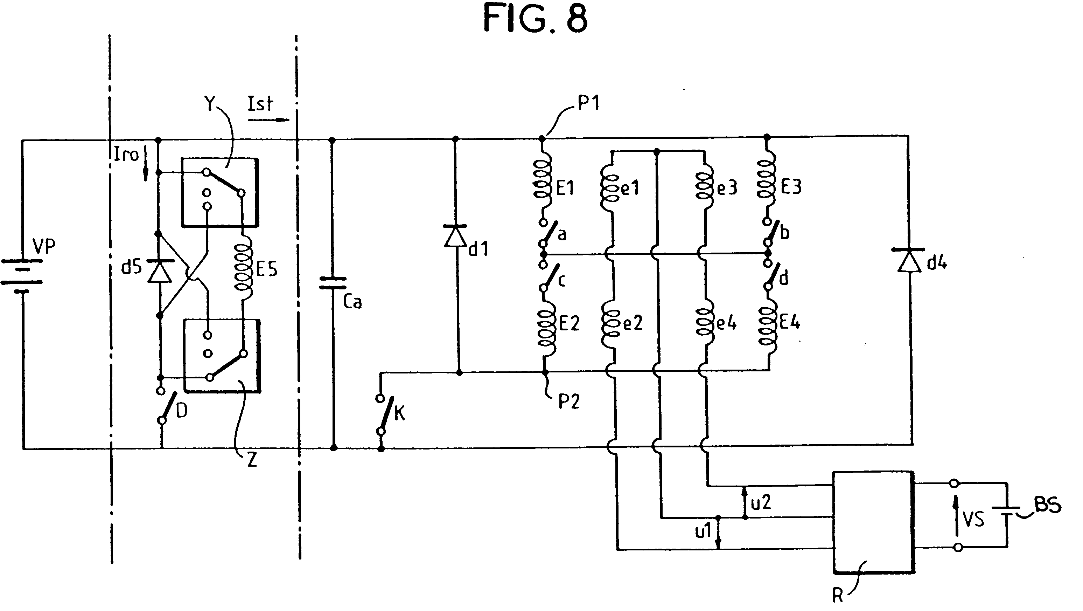

La figure 8 représente le schéma électrique d'une chaîne de traction selon l'invention ayant une fonction de convertisseur pour recharger une batterie de servitude servant à d'autres usages que le fonctionnement du moteur lui-même. Par exemple dans un véhicule électrique, de nombreuses fonctions électriques doivent être assurées par une batterie auxiliaire (phares, éclairage du tableau de bord, etc.) et il est préférable de ne pas prélever d'énergie sur la source VP pour ces fonctions.

Le circuit selon l'invention permet une recharge de la batterie pendant la rotation du moteur, ce qui est important pour un véhicule automobile.

La chaîne de traction représentée comporte un moteur auto-synchrone tel que celui représenté à la figure 4, mais un autre type de moteur auto-synchrone pourrait être utilisé.

Quatre enroulements statoriques supplémentaires e1, e2, e3, e4, respectivement couplés aux enroulements E1, E2, E3, E4, forment le secondaire d'un transformateur avec point milieu. Les enroulements E1, E2, E3, E4 forment le primaire du transformateur.

Les tensions U1 et U2, situées l'une (U1) aux bornes des deux enroulements e1 et e2 et l'autre (U2) aux bornes des deux enroulements e3 et e4, sont simultanément envoyées dans un redresseur R. La tension redressée VS, ajustée à la valeur désirée (6 ou 12 Volts), constitue la tension de charge de la batterie de servitude BS.

En fonctionnement moteur, les tensions U1 et U2 sont d'amplitude constante et de fréquence variable dans la zone de défluxage. Selon l'invention, le redresseur R peut être commandé, par tout moyen connu de l'homme de l'art, de façon à autoriser ou non la charge de la batterie de servitude à des moments judicieusement choisis, par exemple ceux où les performances du moteur ne doivent pas être dégradées.

Ce fonctionnement en convertisseur d'alimentation d'une batterie de servitude est compatible avec le fonctionnement en chargeur, moteur arrêté, décrit à la figure 7, ou avec le fonctionnement en générateur-frein décrit à la figure 6. La fréquence des tensions U1 et U2 est celle du secteur dans le cas du fonctionnement en chargeur; c'est celle du moteur dans les autres fonctionnements.

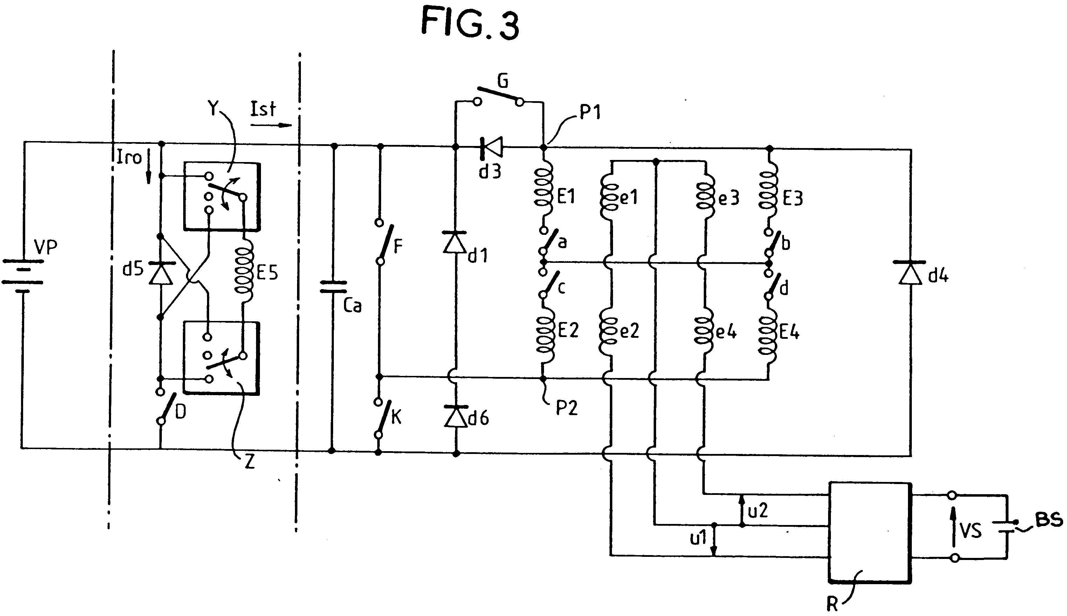

La figure 3 représente le schéma électrique du circuit qui assure les fonctionnements en moteur, en générateur frein, en chargeur et en convertisseur d'une chaîne de traction conforme à l'invention selon un premier mode de réalisation. Cette figure n'est présente qu'à titre indicatif. Elle regroupe les éléments de circuit qui servent aux différents fonctionnements qui ont été décrits en détail sur d'autres figures. Un interrupteur manuel G permet de court-circuiter la diode d3 qui doit être présente en mode "chargeur".

Le fonctionnement en moteur a été décrit à la figure 4, cette figure représentant un moteur auto-synchrone selon l'invention. L'interrupteur G représenté en figure 3 est fermé lors du fonctionnement moteur.

Le fonctionnement en générateur frein a été décrit à la figure 6. L'interrupteur G représenté en figure 3 est fermé lors de ce mode de fonctionnement.

Le fonctionnement en chargeur a été décrit à la figure 7, cette figure représentant une chaîne de traction, avec fonction de chargeur, selon l'invention. L'enroulement rotorique E5 est alors relié au secteur par l'intermédiaire de deux commutateurs Y et Z qui permettent par ailleurs d'assurer l'inversion du sens de marche du moteur par inversion du sens du courant rotorique. L'interrupteur G mentionné en figure 3 est ouvert.

Le fonctionnement en convertisseur, qui s'exerce simultanément avec l'un des précédents fonctionnements, a été décrit à la figure 8.

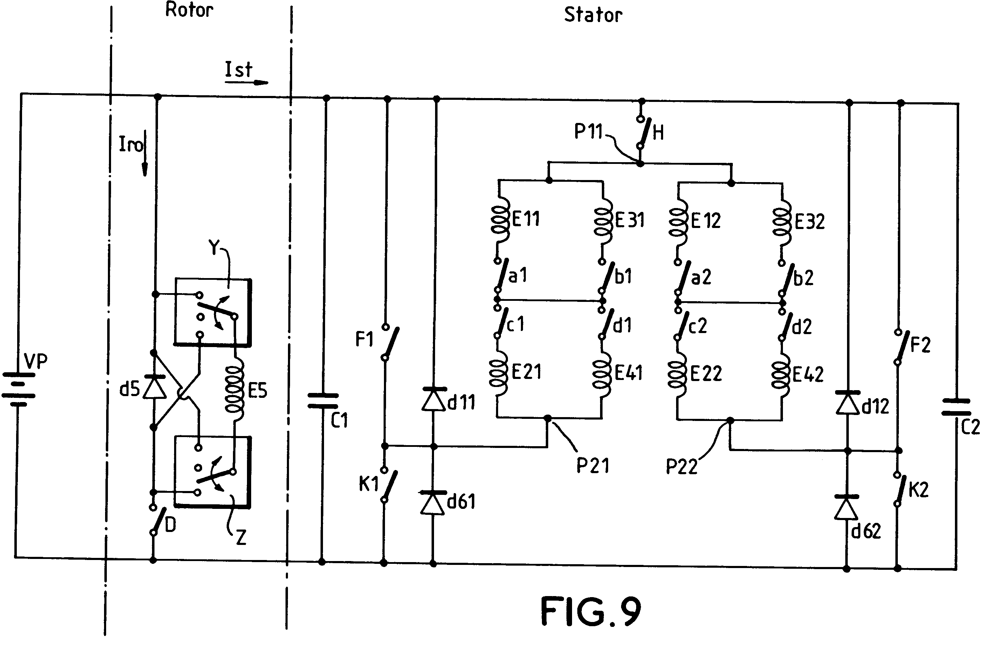

La figure 9 représente le schéma électrique du circuit qui assure les fonctionnements en moteur, en générateur frein, en chargeur et en convertisseur d'une chaîne de traction conforme à l'invention selon un deuxième mode de réalisation.

Ce schéma correspond à un circuit permettant de réduire les ondulations de couple liées aux variations du courant statorique.

Le stator de la chaîne de traction comprend plusieurs sous-ensembles du même type que celui décrit en figure 5. Ainsi chaque sous-ensemble est-il constitué de quatre commutateurs disposés en étoile et de quatre enroulements, chaque enroulement étant relié à un commutateur différent.

Sur la figure 9, un premier sous-ensemble est constitué des quatre commutateurs a1, b1, c1, d1 respectivement reliés aux enroulements E11, E31, E21, E41 et un deuxième sous-ensemble est constitué des quatre commutateurs a2, b2, c2, d2 respectivement reliés aux enroulements E12, E32, E22, E42.

Les enroulements E11 et E31 sont reliés entre eux au même point P11, à la façon dont les enroulements E1 et E3 précédents sont reliés entre eux au même point P1. Il en est de même des enroulements E12 et E32 reliés eux aussi au point P11.

Les enroulements E21 et E41 sont reliés entre eux au même point P21, à la façon dont les enroulements E2 et E4 précédents sont reliés entre eux au même point P2.

Enfin, les enroulements E22 et E42 sont reliés entre eux au même point P22, à la façon dont les enroulements E2 et E4 précédents sont reliés entre eux au point même P2.

Le point P11 est relié à la borne positive de la tension d'alimentation VP par l'intermédiaire d'un interrupteur H.

Le point P21 est relié à un ensemble constitué de deux hacheurs F1 et K1 et de deux diodes d11 et d61 de la même façon que le point P2 est relié à l'ensemble constitué des deux hacheurs F et K et des deux diodes d1 et d6.

De même, le point P22 est relié à un ensemble constitué de deux hacheurs F2 et K2 et de deux diodes d12 et d62 de la même façon que le point P2 est relié à l'ensemble constitué des deux hacheurs F et K et des deux diodes d1 et d6.

En fonctionnement moteur et générateur frein, l'interrupteur H est fermé.

En fonctionnement chargeur l'interrupteur H est ouvert.

Pour des raisons de commodité, les enroulements permettant de réaliser le fonctionnement en convertisseur n'ont pas été représentés sur la figure 9. Il est évident que des enroulements couplés soit aux enroulements E11, E21, E31, E41, soit aux enroulements E12, E22, E32, E42, soit à tous les enroulements sus-nommés permettent de constituer le secondaire d'un transformateur du même type que celui décrit en figure 8.

Comme cela a été décrit précédemment, le stator selon ce deuxième mode de réalisation de l'invention est constitué de deux demi-stators du même type que le stator décrit selon le premier mode de réalisation.

A chacun de ces demi-stators est associée une capacité d'injection de courant : C1 pour le sous-ensemble constitué des enroulements E11, E21, E31, E41 et C2 pour le sous-ensemble constitué des enroulements E12, E22, E32, E42.

Selon l'invention, les deux sous-ensembles décrits ci-dessus sont disposés de façon que les enroulements de l'un soient à 45 degrés des enroulements de l'autre. Une telle disposition permet de diminuer avantageusement les ondulations de couple du fait de la modification du courant statorique.

Selon ce deuxième mode de réalisation, la valeur du courant statorique qui passe dans un sous-ensemble est égale à la moitié de la valeur du courant statorique total Ist. Le courant que doivent fournir les capacités d'injection C1 et C2 est diminué avantageusement grâce au décalage des deux moteurs. En effet, lors de l'absence de courant dans un demi-stator (cf. la commutation des bagues du moteur), le second demi-stator est parcouru par un courant. Ainsi, la configuration à deux semi-stators s'accompagne-t-elle d'une présence permanente de courant statorique, ce qui permet de diminuer avantageusement la taille des capacités d'injection de courant.

Un autre avantage de ce mode de réalisation est de ne pas nécessiter le rajout de diodes destinées spécialement au fonctionnement chargeur comme c'était le cas précédemment (diodes d3 et d4). Les diodes d11 et d62 jouent le rôle de d1 et d4 respectivement (figure 7) : l'interrupteur K1 fermé laisse passer vers la diode d62 le courant généré dans les enroulements en série E22, E12, E11, E21 (en supposant que ce soient les enroulements connectés ensemble par les dispositifs de commutation mécanique dans la position où est arrêté le rotor). En ouvrant l'interrupteur K1, le courant est dévié vers la source VP à travers la diode d11. Les diodes d12 et d61 avec l'interrupteur F1 jouent réciproquement le rôle des diodes d3 et d6 avec l'interrupteur F de la figure 7.

Un autre avantage de l'invention est de permettre un fonctionnement de secours grâce à la redondance du dispositif. En effet, si certains des hacheurs électroniques d'un des deux demi-stators tombent en panne, il est toujours possible de faire fonctionner la chaîne de traction avec l'autre demi-stator.

Selon le mode de réalisation décrit en figure 9, le dispositif comprend deux demi-stators. Il est évident qu'il pourrait en comprendre un nombre supérieur à deux.

Pour tous les circuits décrits dans les figures 1 à 9, l'inversion du sens de la marche de la machine électrique tournante peut s'effectuer en inversant le flux de la machine, ce qui correspond à inverser le sens du courant dans l'enroulement rotorique E5 à l'aide des commutateurs Y et Z.

Il existe, cependant, d'autres manières d'inverser le sens de la marche du moteur.

Une première manière consiste à commander l'inversion du sens de la marche à l'aide d'une boîte mécanique.

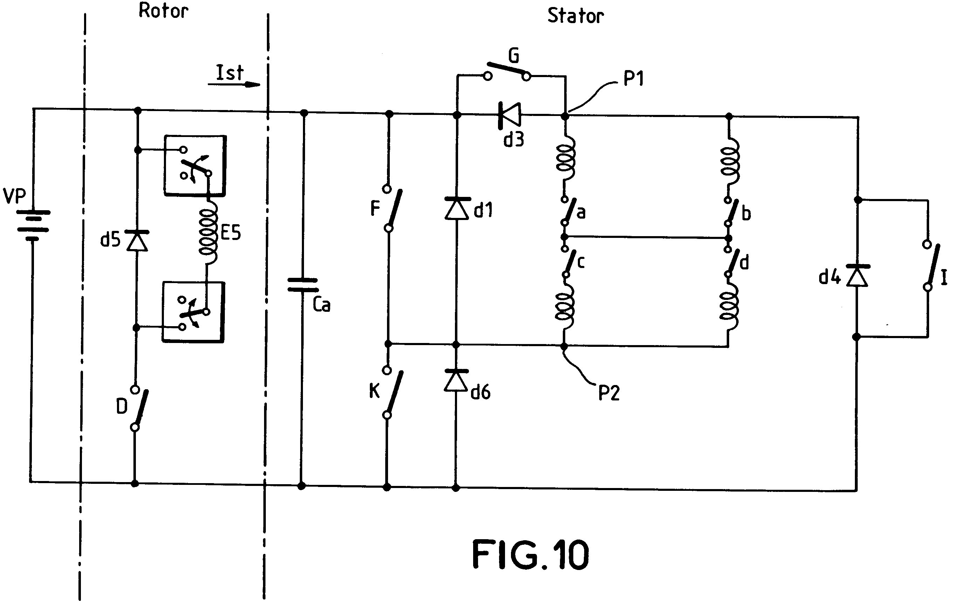

Une autre manière consiste, comme le décrit la figure 10, à déplacer les connexions du moteur par rapport au bras de pont constitué par les hacheurs F et K du dispositif décrit en figure 3.

Sur la figure 10, l'enroulement rotorique E5 a chacune de ses extrémités reliées à un commutateur à deux voies permettant ou non la liaison dudit enroulement avec le circuit de façon à pouvoir assurer ou non les fonctionnements moteur, générateur frein, et convertisseur, le fonctionnement en chargeur étant réalisé quant l'enroulement E5 n'est pas relié au circuit.

Selon la configuration décrite en figure 10, un commutateur I est placé en parallèle de la diode d4.

Pour assurer un premier sens de rotation, l'interrupteur G est fermé et l'interrupteur I ouvert. Le fonctionnement moteur utilise le hacheur K et la diode d1 comme cela est décrit en figure 4. De même le fonctionnement générateur frein utilise le hacheur F et la diode d6 comme cela est décrit en figure 6.

Pour assurer un deuxième sens de rotation, l'interrupteur G est ouvert et l'interrupteur I est fermé. Le fonctionnement moteur est alors réalisé à l'aide du hacheur F et de la diode d6 et le fonctionnement générateur frein à l'aide du hacheur K et de la diode d1. La fonction chargeur est obtenue, au niveau du stator, en ouvrant les interrupteurs G et I.

Selon l'invention, et quel que soit le mode de réalisation décrit sur les figures précédentes (cf. figure 1 à 10) le contrôle de la vitesse et du couple s'effectue par une double action sur les courants rotorique et statorique.

Le hacheur D, associé à la diode d5, permet de contrôler le courant rotorique. Une diminution de ce courant provoque un défluxage qui permet un fonctionnement en sur-vitesse.

Cette double action permet de couvrir toute la plage de fonctionnement couple/vitesse du moteur de traction dans ses diverses sollicitations. On s'attache, par la suite, à fonctionner dans des zones à rendement maximum.

Selon les modes de réalisation décrits précédemment le rotor est pourvu d'un enroulement rotorique E5. L'invention concerne aussi des modes de réalisation ou le rotor est constitué de plusieurs enroulements rotoriques ou de un ou plusieurs aimants. Selon le mode de réalisation où le rotor est constitué d'aimants, l'inversion du sens de la marche ne peut plus être obtenue par inversion de flux mais par l'une quelconque des manières mentionnées ci-dessus (cf. le dispositif à boîte mécanique ou le dispositif décrit en figure 10).

Le défluxage qui permet un fonctionnement en sur-vitesse est alors obtenu par le déplacement du rotor par rapport au stator à l'aide d'un dispositif mécanique commandé, par exemple, par la force centrifuge.

Selon ce mode de réalisation, le fonctionnement en chargeur ne peut plus être réalisé avec l'enroulement rotorique E5 comme cela a été décrit précédemment. D'autres circuits, par exemple un nouvel enroulement statorique, permettent d'assurer la même fonction que l'enroulement E5.

Dans toute la description précédente, l'exemple choisi pour le générateur électrique est un accumulateur. L'invention concerne aussi un système à traction mixte dont le générateur électrique comprend un groupe électrogène.

## Revendications

**1** **-** Moteur électrique auto-synchrone comportant un rotor (E5), un stator formé d'enroulements statoriques (E1, E2, E3, E4), au moins un interrupteur électronique (A, B) relié à un enroulement statorique et commandé par un circuit hacheur à haute fréquence pour contrôler un courant moyen dans 1' enroulement statorique, un capteur de la position angulaire du rotor pour contrôler le circuit hacheur, caractérisé en ce qu'il comporte un dispositif de commutation mécanique tournant (a, b, c, d) entraîné par le rotor, pour aiguiller le courant fourni par une source d'alimentation (VP) dans des enroulements statoriques sélectionnés, en fonction de la position du rotor, le dispositif de commutation étant interposé dans le circuit série formé par la source d'alimentation, les enroulements statoriques et l'interrupteur électronique.

**2** **-** Moteur électrique auto-synchrone selon la revendication 1, caractérisé en ce que le stator comporte au moins un ensemble de quatre enroulements (E1, E2, E3, E4) décalés de 90 degrés électriques les uns des autres, le dispositif de commutation étant relié à une première extrémité de chacun des enroulements, la seconde extrémité de deux des enroulements (E1, E3) étant reliée à la source d'alimentation (VP), la seconde extrémité des deux autres enroulements (E2, E4) étant reliée à l'interrupteur électronique (K), de manière à faire passer le courant successivement dans deux enroulements en série pris parmi les quatre, ces deux enroulements étant décalés de 90° électriques.

**3** **-** Moteur électrique auto-synchrone selon la revendication 2, caractérisé en ce que le dispositif de commutation comporte une bague tournante (BT) entrainée par le rotor et quatre balais fixes (b5,b6,b7,b8) frottant sur la bague.

**4** **-** Moteur électrique auto-synchrone selon la revendication 3, caractérisé en ce que chaque balai (b5,b6,b7,b8) est relié à la première extrémité d'un enroulement statorique (E1, E2, E3, E4) et la bague (BT) comporte comporte au moins une partie conductrice (BT1) capable de relier des balais entre eux.

**5** **-** Moteur électrique auto-synchrone selon l'une des revendications 3 ou 4, caractérisé en ce que la bague (BT) est formée d' une demi-bague conductrice (BT1) et d'une demi-bague isolante (BT2).

**6** **-** Moteur électrique auto-synchrone selon la revendication 1, caractérisé en ce que le stator comporte au moins un ensemble de quatre enroulements (E1, E2, E3, E4) décalés de 90 degrés électriques les uns des autres et montés en étoile, le dispositif de commutation (a, b) étant monté entre la source d'alimentation (VP) et l'extrémité libre de deux des enroulements, un interrupteur électronique (A, B) étant monté entre l'extrémité libre de chacun des deux autres enroulements (E2, E4) et la source d'alimentation (VP), de manière à faire passer le courant successivement dans deux enroulements en série pris parmi les quatre, ces deux enroulements étant décalée de 90° électriques.

**7** **-** Moteur électrique auto-synchrone selon la revendication 6, caractérisé en ce que le dispositif de commutation comporte une bague tournante (B1) et deux demi-bagues (B2, B3) entrainées par la bague (B1), la première demi-bague (B2) étant connectée électriquement à la bague (B1), la seconde demi-bague (B3) étant isolée électriquement de la bague (B1) et de la première demi-bague (B2), la bague (B1) glissant sur un premier balai fixe (b1) relié à la source d'alimentation (VP) et les deux demi-bagues (B2, B3) glissant sur deux balais (b2, b3) reliés chacun à un enroulement (E1, E3).

**8** **-** Moteur électrique auto-synchrone selon la revendication 6, caractérisé en ce que le dispositif de commutation comporte une bague fixe (BT) reliée à la source d'alimentation (VP) et deux demi-bagues fixes (B2, B3), la première demi-bague (B2) étant connectée électriquement à un enroulement (E1), la seconde demi-bague (B3) étant connectée électriquement à un autre enroulement (E3), un balai double (b4) tournant avec le rotor étant prévu pour court-circuiter successivement la bague (BT) et la première demi-bague (B2) puis la bague (BT) et la seconde demi-bague (B3).

**9** **-** Moteur auto-synchrone selon l'une des revendications 1 à 5, caractérisé en ce qu'il comporte, pour pouvoir fonctionner en générateur frein, un interrupteur électronique supplémentaire (F) avec un circuit hacheur, l'interrupteur électronique (F) étant connecté en parallèle sur les enroulements statoriques, et une diode (d6) en série entre la source d'alimentation (VP) et les enroulements pour empêcher le passage d'un courant de décharge de la source d'alimentation (VP).

**10** **-** Chaîne de traction pour véhicule automobile comprenant: -un moteur auto-synchrone avec un rotor (E5), un stator formé d'enroulements statoriques( E1, E2, E3, E4) et au moins un interrupteur électronique relié en série avec un enroulement statorique,
- un dispositif de commande permettant au moteur de fonctionner en générateur-frein (F,d6),
- des moyens (Y,Z,G,I) permettant d'inverser le sens de la marche du moteur électrique,
caractérisée en ce qu'elle comporte aussi des moyens (e1,e2,e3,e4,R) permettant de délivrer une tension alimentant une batterie de servitude, des moyens (d1, d3, d4, d6, K, F) permettant de recharger au moins un accumulateur servant de source d'alimentation au moteur, ces moyens utilisant au moins l'interrupteur électronique.

**11** **-** Chaîne de traction électrique selon la revendication 10, caractérisée en ce que le stator est polyphasé et comprend au moins un ensemble de quatre enroulements statoriques décalés de 90 degrés électriques les uns des autres et un dispositif de commutation séquentielle d'une phase à l'autre avec une bague tournante et quatre balais permettant d'établir le contact entre deux enroulements statoriques quelconques pris parmi lesdits quatre enroulements statoriques et décalés entre eux de 90 degrés électriques.

**12** **-** Chaîne de traction électrique selon la revendication 11, caractérisée en ce que le dispositif de commande de la machine électrique en fonctionnement moteur et en fonctionnement générateur frein (K, F, d1, d6) est constitué d'au moins un premier interrupteur électronique (K) associé à une diode de roue libre (d1), ledit premier interrupteur permettant de commander un ensemble de quatre enroulements statoriques (E1, E2, E3, E4) en fonctionnement moteur, et d'au moins un deuxième interrupteur électronique (F) associé à une diode de roue libre (d6), ledit deuxième interrupteur électronique (F) permettant de commander ledit ensemble de quatre enroulements statoriques (E1, E2, E3, E4) en fonctionnement générateur frein.

**13** **-** Chaîne de traction électrique selon la revendication 11, caractérisée en ce que les moyens (e1, e2, e3, e4, R) permettant de délivrer une tension alimentant une batterie de servitude sont constitués d'au moins un ensemble de quatre enroulements secondaires (e1, e2, e3, e4) à point milieu, chacun desdits enroulements secondaires étant couple à un enroulement dudit ensemble de quatre enroulements statoriques (E1, E2, E3, E4), et d'un redresseur (R) recevant les tensions détectées par lesdits enroulements secondaires.

**14** **-** Chaîne de traction électrique selon la revendication 11, caractérisée en ce qu'elle comprend deux ensembles de quatre enroulements statoriques (E1, E2, E3, E4) et un dispositif de commutation séquentielle d'une phase à l'autre (a, b, c, d) associé à chacun desdits ensembles de quatre enroulements.

**15** **-** Chaîne de traction électrique selon la revendication 14, caractérisée en ce que les moyens (d1, d3, d4 d6, F) permettant de recharger au moins un accumulateur sont constitués d'un pont de quatre diodes, deux d'entre elles étant les diodes de roue libre (d11, d12) associées aux deux interrupteurs électroniques (K1, K2) permettant de commander le fonctionnement moteur et les deux autres étant les diodes de roue libre (d61, d62) associées aux deux interrupteurs électronique (F1, F2) permettant de commander le fonctionnement générateur frein.

**16** **-** Chaîne de traction électrique selon la revendication 11, caractérisée en ce qu'elle comprend un ensemble de quatre enroulements statoriques (E1, E2, E3, E4) et un dispositif de commutation séquentielle d'une phase à l'autre (a, b, c, d) associé audit ensemble de quatre enroulements.

**17** **-** Chaîne de traction électrique selon la revendication 16, caractérisée en ce que les moyens (d1, d3, d4, d6) permettant de recharger au moins un accumulateur sont constituées d'un pont de quatre diodes, deux d'entre elles (d1, d6) étant les diodes de roue libre associés aux interrupteurs électroniques permettant de commander l'un le fonctionnement moteur et l'autre le fonctionnement générateur frein, les deux autres diodes (d3, d4) étant spécifiques à la fonction de recharge.

**18** **-** Chaîne de traction électrique selon l'une quelconque des revendications 10 à 17, caractérisée en ce que le rotor est constitué d'au moins un enroulement rotorique (E5).

**19** **-** Chaîne de traction électrique selon la revendication 18, caractérisée en ce que les moyens (Y, Z, G, I) permettant d'inverser le sens de la marche de la machine électrique comprennent deux commutateurs (Y, Z) et des éléments de câblage permettant d'inverser le sens du courant dans les enroulements rotoriques (E5).

**20** **-** Chaîne de traction électrique selon l'une des revendications 18 ou 19, caractérisée en ce que les moyens (Y, Z, G, I) permettant d'inverser le sens de la marche de la machine électrique sont constitués de deux interrupteurs (G, I) dont l'un (G) est placé en parallèle d'une des deux diodes spécifiques à la fonction de recharge (d3) et l'autre (I) est placé en parallèle de l'autre des deux diodes spécifiques à la fonction de recharge (d4).

**21** **-** Chaîne de traction électrique selon l'une quelconque des revendications 10 à 17, caractérisée en ce que le rotor est à aimants.

**22** **-** Chaîne de traction électrique selon l'une quelconque des revendications 10 à 17 ou 21, caractérisée en ce que les moyens permettant d'inverser le sens de la marche de la machine électrique sont constitués d'une boîte mécanique.

**23** **-** Chaîne de traction électrique notamment pour véhicule automobile comportant une source d'alimentation rechargeable (VP), un moteur auto-synchrone pourvu d'un rotor (E5), d'un stator, avec des enroulements (E1, E2, E3, E4) pour faire fonctionner le moteur et d'au moins un interrupteur électronique (K) pour contrôler le courant moyen de la source dans au moins un des enroulements lorsque le moteur fonctionne, caratérisée en ce qu'elle comporte aussi des moyens pour recharger la source d'alimentation rechargeable (VP) lorsque le moteur est à l'arret, ces moyens utilisant l'interrupteur électronique de contrôle (K), au moins deux enroulements formant respectivement le secondaire et le primaire d'un transformateur et une ou plusieurs diodes qui laissent passer le courant dans un sens de recharge de la source d'alimentation (VP).

**24** **-** Chaîne de traction selon la revendication 23, caractérisée en ce que le rotor (E5) est bobiné et sert de primaire au transformateur, au moins un enroulement (E1,E2,E3,E4) du stator servant de secondaire.

**25** **-** Chaîne de traction selon l'une des revendications 23 ou 24, caratérisée en ce que le moteur autosynchrone est réalisé selon l'une des revendications 1 à 9.

**26** **-** Chaîne de traction selon la revendication 24 dans laquelle l'interrupteur électronique de contrôle (K) a une première extrémité reliée à une première extrémité d'une diode (d1) de roue libre lorsque le moteur fonctionne, caractérisée en ce que les secondes extrémités de l'interrupteur électronique (K) et de la diode de roue libre (d1) sont connectées aux bornes de la source d'alimentation rechargeable (VP), le secondaire du transformateur (E1, E2) étant monté entre la première extrémité de l'interrupteur électronique de contrôle (K) et la seconde extrémité par l'intermédiaire d'une diode supplémentaire (d4).

**27** **-** Chaîne de traction selon la revendication 26, caractérisée en ce que les moyens pour recharger la source d'alimentation rechargeable (VP) comportent en outre un second interrupteur électronique (F) ayant une première extrémité reliée à une première extrémité d'une diode de roue libre (d6), les secondes extrémités de l'interrupteur électronique (F) et de la diode de roue libre (d6) étant connectées aux bornes de la source d'alimentation (VP), une diode supplémentaire (d3) étant interposée entre le secondaire du transformateur et la seconde extrémité de l'interrupteur électronique (F).

**28** **-** Chaîne de traction électrique notamment pour véhicule électrique comportant un moteur auto-synchrone dont le stator possède des enroulements statoriques(E1, E2, E3, E4) permettant de faire tourner le moteur, caractérisée en ce que le stator comporte au moins un enroulement supplémentaire (e1, e2, e3, e4) couplé électromagnétiquenment aux enroulements statoriques et en ce qu'il est prévu un circuit de redressement (R) connecté entre l'enroulement supplémentaire et une batterie de servitude (BS) pour recharger la batterie de servitude pendant la rotation du moteur.

**29** **-** Chaîne de traction selon la revendication 28, caratérisée en ce que le moteur autosynchrone est réalisé selon l'une des revendications 1 à 9.

**30** **-** Chaîne de traction selon l'une des revendications 28 ou 29, caractérisée en ce que le stator a plusieurs enroulements supplémentaires (e1, e2, e3, e4) qui forment le secondaire d'un transformateur à point milieu dont le primaire est formé des enroulements statoriques (E1, E2, E3, E4).
